# EUROPÄISCHE PATENTSCHRIFT

(11) **EP 2 322 783 B1**
(45) Veröffentlichungstag und Bekanntmachung des Hinweises auf die Patenterteilung: **06.11.2013**
(21) Anmeldenummer: 10009242.8
(22) Anmeldetag: 06.09.2010
(51) Int. Cl.: F02D 9/04, F02D 9/08, F02D 9/10, F16K 11/20, F16K 39/02

(54) **Ventileinrichtung zum wahlweise Öffnen oder Verschließen einer Überströmfläche**
Valve assembly for opening or closing a branch passage
Dispositif de vannage pour ouvrir ou fermer un conduit d'embranchement

(30) Priorität: 16.11.2009 DE 102009053464
(43) Veröffentlichungstag der Anmeldung: 18.05.2011
(73) Patentinhaber: Volkswagen Aktiengesellschaft, 38440 Wolfsburg (DE)
(72) Erfinder: Holthoff, Oliver, 38547 Wettmershagen (DE)

(56) Entgegenhaltungen:
- DE-A1-102004 055 846
- DE-A1-102005 002 266
- DE-A1-102005 009 638
- DE-B- 1 204 476
- FR-A- 1 041 060

## Beschreibung

Die Erfindung betrifft eine Ventileinrichtung, insbesondere Abgasleiteinrichtung, zum wahlweise Öffnen oder Verschließen einer Überströmfläche einer Abzweigung von einem ersten Fluidkanal, insbesondere Abgaskanal, insbesondere einer Brennkraftmaschine, in dem ein Fluiddruck, insbesondere Abgasdruck, herrscht, in einen zweiten Fluidkanal, insbesondere Abgaskanal, insbesondere einer Brennkraftmaschine, wobei die Ventileinrichtung mindestens zwei Ventilelemente umfasst, gemäß dem Oberbegriff des Patentanspruchs 1. Die Erfindung betrifft ferner ein Verfahren zum Öffnen einer Überströmfläche einer Abzweigung von einem ersten Fluidkanal, insbesondere Abgaskanal, insbesondere einer Brennkraftmaschine, in einen zweiten Fluidkanal, insbesondere Abgaskanal, insbesondere einer Brennkraftmaschine, wobei die Überströmfläche von einer Ventileinrichtung wahlweise geöffnet oder verschlossen wird. Die Erfindung betrifft ferner ein Verfahren zum Verschließen einer Überströmfläche einer Abzweigung von einem ersten Fluidkanal, insbesondere Abgaskanal, insbesondere einer Brennkraftmaschine, in einen zweiten Fluidkanal, insbesondere Abgaskanal, insbesondere einer Brennkraftmaschine, wobei die Überströmfläche von einer. Ventileinrichtung wahlweise geöffnet oder verschlossen wird.

Aus der gattungsgemäßen DE 10 2006 024 781 A1 ist eine zweistufige Abgasturboladeranordnung für eine Brennkraftmaschine bekannt, bei der ein Drosselelement einen Bypasskanal wahlweise öffnet oder verschließt. Dieser Bypasskanal verbindet einen Abgaskrümmer und ein Niederdruckgehäuse in Strömungsrichtung des Abgases vor der Niederdruckturbine Abgas führend miteinander. Das Drosselelement ist von einer ersten, um eine erste Achse schwenkbaren und einer zweiten, um eine zweite Achse schwenkbaren Klappe gebildet.

Der Erfindung liegt die Aufgabe zugrunde, eine Ventileinrichtung der o.g. Art sowie ein Verfahren zum Öffnen bzw. Schließen einer Überströmfläche mit dieser Ventileinrichtung hinsichtlich einem erforderlichen Kraftaufwand, Bauraumbedarf und Regelverhalten zu verbessern.

Diese Aufgabe wird erfindungsgemäß durch eine Ventileinrichtung der o.g. Art mit den in Anspruch 1 gekennzeichneten Merkmalen, mit einem Verfahren der o.g. Art mit den in Anspruch 8 gekennzeichneten Merkmalen und mit einem Verfahren der o.g. Art mit den in Anspruch 9 gekennzeichneten Merkmalen gelöst. Vorteilhafte Ausgestaltungen der Erfindung sind in den weiteren Ansprüchen beschrieben.

Dazu ist es bei einer Ventileinrichtung der o.g. Art erfindungsgemäß vorgesehen, dass die mindestens zwei Ventilelemente derart angeordnet sind, dass mindestens ein erstes Ventilelement gegen den Fluiddruck in dem ersten Fluidkanal einen vorbestimmten ersten Anteil der Überströmfläche der Abzweigung öffnet und mindestens ein zweites Ventilelement gegen den Fluiddruck in dem ersten Fluidkanal einen vorbestimmten zweiten Anteil der Überströmfläche der Abzweigung verschließt.

Dies hat den Vorteil, dass zum Verschließen der Überströmfläche ein geringerer Kraftaufwand notwendig ist, da mindestens ein erstes Ventilelement durch den Fluiddruck in dem ersten Fluidkanal in Schließstellung gedrückt wird; wobei gleichzeitig ein Fluidmassenstrom über die Überströmfläche von dem ersten Fluidkanal in den zweiten Fluidkanal mit geringem Kraftaufwand geregelt werden kann, da mindestens ein zweites Ventilelement durch den Fluiddruck in dem ersten Fluidkanal in Richtung einer Öffnungsstellung gedrückt wird und somit nicht entgegen dem Fluiddruck in dem ersten Fluidkanal geöffnet werden muss.
Das Vermeiden des bekannten, hohen Kraftaufwandes bedeutet, dass die damit verbundenen hohen Kosten, der erhöhte Bauraumbedarf eines entsprechenden Stellers und die vergleichsweise langsame Verstellgeschwindigkeit des Stellers bzw. des Aktuators vermieden sind. Eine relativ hohe Stellgeschwindigkeit verbessert das Regelverhalten.

Eine mechanisch besonders einfache ausgebildete Ventileinrichtung mit geringem Bauraumbedarf und gleichzeitig wenig Strömungswiderstand im Bereich der Abzweigung erzielt man dadurch, dass mindestens ein erstes Ventilelement als eine erste Klappe, insbesondere Abgasklappe, und mindestens ein zweites Ventilelement als eine zweite Klappe, insbesondere Abgasklappe, ausgebildet ist.

Eine weitere Reduktion der notwendigen Kräfte zum Verschließen der Überströmfläche erzielt man dadurch, dass der erste vorbestimmte Anteil der Überströmfläche größer ist als der zweite vorbestimmte Anteil der Überströmfläche.

Eine zusätzliche Führung von Fluid unter Vermeidung von turbulenten Strömungen und damit unter Vermeidung eines unerwünschte hohen Strömungswiderstandes im Bereich der Eine mechanisch besonders einfache Ausführungsform mit geringen Herstellungskosten und geringem Montageaufwand erzielt man dadurch, dass das mindestens eine erste Ventilelement und das mindestens eine zweite Ventilelement über eine Reihenschaltung mit dem gemeinsamen Aktuator verbunden sind.

Eine wahlweise mehr oder weniger starke Umleitung des Fluidstroms, insbesondere Abgasstromes, von der ersten Fluidleitung in die zweite Fluidleitung erzielt man dadurch, dass mindestens ein erstes Ventilelement derart ausgebildet und angeordnet ist, dass dieses wahlweise den ersten Fluidkanal im Bereich der Abzweigung mindestens teilweise verschließt.

Ferner ist es bei einem Verfahren zum Öffnen einer Überströmfläche der o.g. Art erfindungsgemäß vorgesehen, dass zum Öffnen der Überströmfläche zuerst mindestens eine zweite Klappe geöffnet wird, bevor eine erste Klappe geöffnet wird.

Dies hat den Vorteil, dass die zweite Klappe aufgrund der Unterstützung des Fluiddruckes mit geringem Kraftaufwand geöffnet wird, wobei sich danach ein teilweiser Druckausgleich zwischen dem ersten und dem zweiten Fluidkanal ergibt, so dass die erste Klappe nicht mehr gegen den vollen Fluiddruck im dem ersten Fluidkanal sondern mit geringerem Kraftaufwand gegen einen reduzierten Fluiddruck geöffnet wird. Insgesamt kann somit die Überströmfläche mit geringem Kraftaufwand durch mindestens einen entsprechenden Aktuatoren geöffnet werden.

Ferner ist es bei einem Verfahren zum Verschließen einer Überströmfläche der o.g. Art erfindungsgemäß vorgesehen, dass zum Verschließen der Überströmfläche zuerst mindestens eine zweite Klappe geschlossen wird, bevor eine erste Klappe geschlossen wird.

Dies hat den Vorteil, dass der Kraftaufwand zum Verschließen reduziert ist, da die zweite Klappe nicht gegen den vollen Fluiddruck in dem ersten Fluidkanal geschlossen wird und zusätzlich das Schließen der ersten Klappe durch einen erhöhten Fluiddruck in dem ersten Fluidkanal aufgrund der bereits geschlossenen zweiten Klappe unterstützt wird.

Die Erfindung wird im Folgenden anhand der Zeichnung näher erläutert. Diese zeigt in
- Fig. 1: eine bevorzugte Ausführungsform einer erfindungsgemäßen Ventileinrichtung in schematischer Schnittdarstellung in einem ersten Zustand,
- Fig. 2: die Ventileinrichtung gemäß Fig. 1 in einem zweiten Zustand,
- Fig. 3: die Ventileinrichtung gemäß Fig. 1 in einem dritten Zustand und
- Fig. 4: die Ventileinrichtung gemäß Fig. 1 in einem vierten Zustand.

Nachfolgend wird die Erfindung anhand von Abgaskanälen einer Abgasanlage einer Brennkraftmaschine dargestellt, da diese Anwendung besonders vorteilhaft ist. Dies ist jedoch lediglich beispielhaft. Die erfindungsgemäße Ventileinrichtung ist unabhängig von einer Brennkraftmaschine und einer Abgasturboaufladung in jedem fluidleitenden Kanal (Fluidkanal) einsetzbar. Nachfolgend stehen die Ausdrücke "Abgaskanal", "Abgasklappe", "Abgasdruck" und "Abgas" lediglich stellvertretend jeweils für die allgemeinen Ausdrücke "Fluidkanal", "Fluidklappe", "Fluiddruck" und "Fluid", um eine anschaulichere Beschreibung einer beispielhaften Ausführungsform der Erfindung darzustellen.

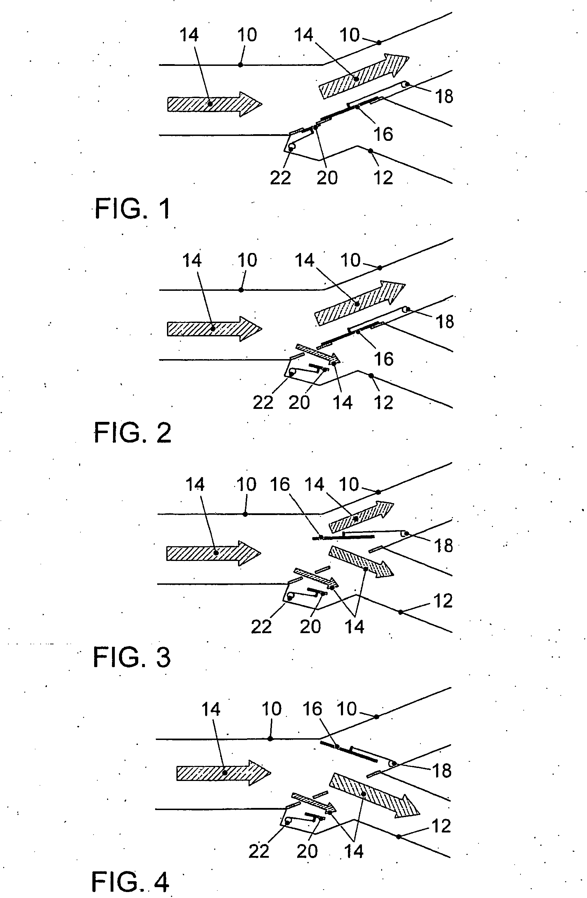

Die in den Fig. 1 bis 4 beispielhaft dargestellte, bevorzugte Ausführungsform einer erfindungsgemäßen Ventileinrichtung ist in einem ersten Abgaskanal 10 einer beispielsweise zweistufigen Abgasturboladeraufladung für eine nicht näher dargestellte Brennkraftmaschine angeordnet. Hierbei verschließt die Ventileinrichtung eine Überströmfläche an einer Abzweigung von dem ersten Abgaskanal 10 in einen zweiten, von dem ersten Abgaskanal 10 abzweigenden Abgaskanal 12. Der erste Abgaskanal 10 führt Abgas 14 zu einer Turbine eines Hochdruckabgasturboladers (nicht dargestellt) und der zweite Abgaskanal 12 führt Abgas 14 zu einer Turbine eines Niederdruckabgasturboladers (nicht dargestellt). Das Abgas 14 kommt beispielsweise von einem Abgaskrümmer der Brennkraftmaschine bzw. aus Arbeitszylindern der Brennkraftmaschine und enthält eine bestimmte Enthalpie, die für den Antrieb der Turbinen der Abgasturbolader genutzt werden soll. Das Abgas 14 strömt in den Fig. 1 bis 4 von links nach rechts, wie mit den Pfeilen angedeutet, und erzeugt dabei einen entsprechenden Abgasdruck in dem ersten Abgaskanal 10.

Die Ventileinrichtung umfasst eine erste Abgasklappe 16, welche um eine erste Achse 18 verschwenkbar ist, und eine zweite Abgasklappe 20, welche um eine zweite, von der ersten Achse beabstandeten zweiten Achse 22 verschwenkbar ist. Die erste Abgasklappe 16 verschließt einen ersten Anteil der Überströmfläche und die zweite Abgasklappe 20 verschließt einen zweiten Anteil der Überströmfläche. Hierbei ist die erste Abgasklappe 16 größer ausgebildet als die zweite Abgasklappe 20, so dass die erste Abgasklappe 16 einen größeren Anteil der Überströmfläche verschließt als die zweite Abgasklappe 20. Dies ist jedoch lediglich beispielhaft. Das Klappengrößenverhältnis ist nicht zwingend derart ausgebildet, wie in den Fig. dargestellt.

In Fig. 1 ist ein erster Zustand der Ventileinrichtung dargestellt, bei dem beide Abgasklappen 16 und 20 geschlossen sind, so dass das gesamte Abgas von dem ersten Abgaskanal 10 zur Turbine des Hockdruckturboladers geleitet wird. Aus Fig. 1 ist unmittelbar ersichtlich, dass die erste Abgasklappe 16 derart angeordnet und ausgebildet ist, dass diese gegen den Abgasdruck in dem ersten Abgaskanal 10 einen Anteil der Überströmfläche öffnet und beim Verschließen dieses Anteils der Überströmfläche von dem Abgasdruck in dem ersten Abgaskanal 10 unterstützt wird. Der Abgasdruck in dem ersten Abgaskanal 10 drückt somit die erste Abgasklappe 16 in Schließrichtung gegen entsprechende Sitze, an denen die erste Abgasklappe 16 in Schließstellung, wie in Fig. 1 dargestellt, dichtend anschlägt. Durch die große Fläche der ersten Abgasklappe 16 ergibt sich eine entsprechen große Unterstützung des Verschließens vom auf die erste Abgasklappe 16 wirkenden Abgasdruck in dem ersten Abgaskanal 10. Durch die Wirkung des Abgasdruckes auf die erste Abgasklappe 16 wird diese um so stärker in deren Sitz gedrückt, je höher der Abgasdruck in der ersten Abgasleitung 10 ist. Somit ist auch bei zunehmendem Abgasdruck eine ausreichend dichtes Schließen durch die erste Abgasklappe 16 sichergestellt.

Weiterhin ist aus Fig. 1 ersichtlich, dass die kleinere zweite Abgasklappe 20 gegen den Abgasdruck in dem ersten Abgaskanal 10 einen Anteil der Überströmfläche verschließt. Hier unterstützt also der Abgasdruck in dem ersten Abgaskanal 10 nicht den Schließvorgang, sondern ein die zweite Abgasklappe 20 betätigender Aktuator (nicht dargestellt) muss zusätzlich eine entsprechende Kraft aufbringen, um den Abgasdruck in dem ersten Abgaskanal 10 zu überwinden, damit die zweite Abgasklappe 20 in Schließstellung, wie in Fig. 1 dargestellt, an entsprechenden Sitzen dichtend anschlägt. Da jedoch die Fläche der kleineren, zweiten Abgasklappe 20, auf die der Abgasdruck in dem ersten Abgaskanal 10 wirkt, relativ klein ist, ist auch die zusätzliche Kraft beim Schließen der zweiten Abgasklappe 20 gegen den Abgasdruck in dem ersten Abgaskanal 10 dementsprechend klein und daher ohne weiteres von einem Aktuator aufzubringen.

Zum Öffnen der Überströmfläche der Abzweigung von dem ersten Abgaskanal 10 in den zweiten Abgaskanal 12 wird zunächst die erste Abgasklappe 16 geschlossen gehalten und die zweite Abgasklappe 20 geöffnet, wie in Fig. 2 dargestellt. In Fig. 2 ist die Ventileinrichtung in einem zweiten Zustand dargestellt. Dieses Öffnen der zweiten Abgasklappe 20 benötigt keinen besonderen Kraftaufwand durch einen entsprechenden Aktuator, da der Abgasdruck in dem ersten Abgaskanal 10 dieses Öffnen unterstützt. Durch den nun offenen Anteil der Überströmfläche strömt Abgas 14 in den zweiten Abgaskanal 12 und es erfolgt ein gewisser Druckausgleich. Dadurch reduziert sich der Druck, welcher auf die erste Abgasklappe 16 in deren Schließrichtung wirkt, da die Druckdifferenz beidseits der in Schließstellung befindlichen ersten Abgasklappe 16 reduziert ist. Auf diese Weise kann nun anschließend nach Öffnen der besonderen Kraftaufwand durch einen entsprechenden Aktuator, da der Abgasdruck in dem ersten Abgaskanal 10 dieses Öffnen unterstützt. Durch den nun offenen Anteil der Überströmfläche strömt Abgas 14 in den zweiten Abgaskanal 12 und es erfolgt ein gewisser Druckausgleich. Dadurch reduziert sich der Druck, welcher auf die erste Abgasklappe 16 in deren Schließrichtung wirkt, da die Druckdifferenz beidseits der in Schließstellung befindlichen ersten Abgasklappe 16 reduziert ist. Auf diese Weise kann nun anschließend nach Öffnen der zweiten Abgasklappe 20 und nach einer gewissen Zeit des Druckausgleiches die erste Abgasklappe 16 mit geringerem Kraftaufwand geöffnet werden, wie in Fig. 3 dargestellt, als dies der Fall wäre, wenn der volle Abgasruck in dem ersten Abgaskarial 10 auf die erste Abgasklappe 16 wirken würde. In Fig. 3 ist die Ventileinrichtung in einem dritten Zustand dargestellt. In diesem dritten Zustand strömt ein höherer Anteil des Abgasmassenstromes an der Abzweigung von dem ersten Abgaskanal 10 in den zweiten Abgaskanal 12 über, als dies bei dem in Fig. 2 dargestellten, zweiten Zustand der Ventileinrichtung der Fall ist. Es strömt jedoch weiterhin auch ein Teil des Abgasmassenstromes weiter in dem ersten Abgaskanal 10 stromab der Abzweigung. Die erste Abgasklappe 16 ist beispielsweise als Leitblech mit einer spitzen Kante an einem stromaufseitigen Ende der ersten Abgasklappe 16 ausgebildet, so dass die Aufteilung des Abgasmasseristromes durch die erste Abgasklappe 16 auf die beiden Abgaskanäle 10 und 12 mit möglichst geringem Strömungswiderstand erfolgt.

Ein weiteres Bewegung der ersten Abgasklappe 16 führt zu dem in Fig. 4 dargestellten vierten Zustand der Ventileinrichtung, bei dem an der Abzweigung der erste Abgaskanal 10 durch die erste Abgasklappe 16 im Wesentlichen verschlossen ist und der Abgasmassenstrom im Wesentlichen in den zweiten Abgaskanal 12 geleitet wird.

Die erfindungsgemäße Ausbildung der Ventileinrichtung zeichnet sich dadurch aus, dass eine einzelne Klappe an einer Abzweigung, beispielsweise bei einem 2-stufigen Aufladesystems, durch zwei oder mehr Ventilelemente bzw. Klappen gleicher oder unterschiedlicher Größe ersetzt ist. Damit ist es zusätzlich möglich anstatt des vollständigen Öffnens der Überströmfläche an der Abzweigung gemäß Fig. 3 zwischen dem ersten und zweiten Zustand gemäß der Fig. 1 und 2 hin und her zu wechseln bzw. im zweiten Zustand gemäß Fig. 2 die zweite Abgasklappe 16 bzw. dieses zweite Ventil mit kleinerem Querschnitt mehr oder weniger weit zu öffnen und dadurch über diese zweite Abgasklappe 20 oder dieses zweite Ventil mit kleinerem Querschnitt den Abgasmassenstrom und damit die Energieverteilung und somit den Ladedruck zu regeln. Bei einem relativ kleinen Abgasmassenstrom wird die zweite Abgasklappe 20 oder das zweite Ventil mit kleinerem Querschnitt mit geringerer Kraft geschlossen gehalten. Steigt der Abgasmassenstrom und damit der anliegende bzw. im ersten Abgaskanal 10 herrschende Abgasdruck und dementsprechend die notwendige Zuhaltekraft für die zweite Abgasklappe'20, ist infolge des kleineren Querschnitts eine bessere Regelung (schneller und geringere Abweichung) möglich, da ein Aktuator für geringere Kräfte schneller und genauer ist. Darüber hinaus ist ein derartiger Aktuator auch kosten- und bauraumgünstiger. Die größere, erste Abgasklappe 16 wird durch den Abgasdruck in dem ersten Abgaskanal 10 geschlossen gehalten, bis durch die Öffnung der kleinen zweiten Abgasklappe 20 der Druck nahezu ausgeglichen ist (Fig. 2). Nun kann die große, erste Abgasklappe 16 mit geringem Kraftaufwand geöffnet werden und dient bei dieser beispielhaften Ausführungsform zusätzlich als abgasseitiges Leitblech (Fig. 3 und 4). Die beiden Klappen oder Ventile 16, 20 werden beispielsweise mit einem einzigen Aktuator über eine Reihenschaltung in der Art einer Registerklappe betätigt und lassen sich dabei noch gegebenenfalls zusätzlich mit einer Funktionsintegration "Turbinenbypass mit Wastegate" kombinieren. Dabei sperren die Klappen 16, 20 je nach Stellung einer der beiden erwähnten Abgasturbolader in der Art eines Turbinenbypasses ab bzw. die kleine Klappe 20 wird als Wastegateventil für den an den Fluidkanal 10 angeschlossene Turbolader angesprochen.

## Patentansprüche

1. Ventileinrichtung, insbesondere Abgasleiteinrichtung, zum wahlweise Öffnen oder Verschließen einer Überströmfläche einer Abzweigung von einem ersten Fluidkanal, insbesondere erster Abgaskanal (10), insbesondere einer Brennkraftmaschine, in dem ein Fluiddruck, insbesondere Abgasdruck, herrscht, in einen zweiten Fluidkanal, insbesondere zweiter Abgaskanal (12), insbesondere einer Brennkraftmaschine, wobei die Ventileinrichtung mindestens zwei Ventilelemente (16, 20) umfasst, **dadurch gekennzeichnet, dass** die mindestens zwei Ventilelemente (16, 20) derart angeordnet und ausgebildet sind, dass mindestens ein erstes Ventilelement (16) gegen den Fluiddruck in dem ersten Fluidkanal (10) einen vorbestimmten ersten Anteil der Überströmfläche der Abzweigung öffnet und mindestens ein zweites Ventilelement (20) gegen den Fluiddruck in dem ersten Fluidkanal (10) einen vorbestimmten zweiten Anteil der Überströmfläche der Abzweigung verschließt.

2. Ventileinrichtung nach Anspruch 1, **dadurch gekennzeichnet, dass** mindestens ein erstes Ventilelement (16) als eine erste Klappe, insbesondere erste Abgasklappe, und mindestens ein zweites Ventilelement (20) als eine zweite Klappe, insbesondere zweite Abgasklappe, ausgebildet ist.

3. Ventileinrichtung nach mindestens einem der vorhergehenden Ansprüche, **dadurch gekennzeichnet, dass** der erste vorbestimmte Anteil der Überströmfläche größer ist als der zweite vorbestimmte Anteil der Überströmfläche.

4. Ventileinrichtung nach mindestens einem der vorhergehenden Ansprüche, **dadurch gekennzeichnet, dass** mindestens ein erstes Ventilelement (16) als Leitblech ausgebildet ist.

5. Ventileinrichtung nach mindestens einem der vorhergehenden Ansprüche, **dadurch gekennzeichnet, dass** mindestens ein Aktuator vorgesehen ist, welcher sowohl mindestens ein erstes Ventilelement (16) als auch mindestens ein zweites Ventilelement (20) betätigt.

6. Ventileinrichtung nach Anspruch 5, **dadurch gekennzeichnet, dass** das mindestens eine erste Ventilelement (16) und das mindestens eine zweite Ventilelement (20) über eine Reihenschaltung mit dem gemeinsamen Aktuator verbunden sind.

7. Ventileinrichtung nach mindestens einem der vorhergehenden Ansprüche, **dadurch gekennzeichnet, dass** mindestens ein erstes Ventilelement (16) derart ausgebildet und angeordnet ist, dass dieses wahlweise den ersten Fluidkanal (10) im Bereich der Abzweigung mindestens teilweise verschließt.

8. Verfahren zum Öffnen einer Überströmfläche einer Abzweigung von einem ersten Fluidkanal, insbesondere Abgaskanal, insbesondere einer Brennkraftmaschine, in einen zweiten Fluidkanal, insbesondere Abgaskanal, insbesondere einer Brennkraftmaschine, wobei die Überströmfläche von einer Ventileinrichtung wahlweise geöffnet oder verschlossen wird, wobei die Ventileinrichtung gemäß mindestens einem der vorhergehenden Ansprüche ausgebildet ist, **dadurch gekennzeichnet, dass** zum Öffnen der Überströmfläche zuerst mindestens eine zweite Klappe geöffnet wird, bevor eine erste Klappe geöffnet wird.

9. Verfahren zum Verschließen einer Überströmfläche einer Abzweigung von einem ersten Fluidkanal, insbesondere Abgaskanal, insbesondere einer Brennkraftmaschine, in einen zweiten Fluidkanal, insbesondere Abgaskanal, insbesondere einer Brennkraftmaschine, wobei die Überströmfläche von einer Ventileinrichtung wahlweise geöffnet oder verschlossen wird, wobei die Ventileinrichtung.gemäß mindestens einem der Ansprüche 1 bis 7 ausgebildet ist, **dadurch gekennzeichnet, dass** zum Verschließen der Überströmfläche zuerst mindestens eine zweite Klappe geschlossen wird, bevor eine erste Klappe geschlossen wird.

## Claims

1. Valve device, in particular exhaust-gas guiding device, for selectively opening or closing a flow-transfer passage of a branch from a first fluid duct, in particular first exhaust-gas duct (10), in particular of an internal combustion engine, in which a fluid pressure, in particular exhaust-gas pressure, prevails, into a second fluid duct, in particular second exhaust-gas duct (12), in particular of an internal combustion engine, wherein the valve device comprises at least two valve elements (16, 20), **characterized in that** the at least two valve elements (16, 20) are arranged and designed such that at least one first valve element (16) opens a predetermined first part of the flow-transfer passage of the branch counter to the fluid pressure in the first fluid duct (10), and at least one second valve element (20) closes a predetermined second part of the flow-transfer passage of the branch counter to the fluid pressure in the first fluid duct (10).

2. Valve device according to Claim 1, **characterized in that** at least one first valve element (16) is in the form of a first flap, in particular first exhaust-gas flap, and at least one second valve element (20) is in the form of a second flap, in particular second exhaust-gas flap.

3. Valve device according to at least one of the preceding claims, **characterized in that** the first predetermined part of the flow-transfer passage is larger than the second predetermined part of the flow-transfer passage.

4. Valve device according to at least one of the preceding claims, **characterized in that** at least one first valve element (16) is in the form of a guide plate.

5. Valve device according to at least one of the preceding claims, **characterized in that** at least one actuator is provided which actuates both at least one first valve element (16) and at least one second valve element (20).

6. Valve device according to Claim 5, **characterized in that** the at least one first valve element (16) and the at least one second valve element (20) are connected to the common actuator by way of a series connection.

7. Valve device according to at least one of the preceding claims, **characterized in that** at least one first valve element (16) is designed and arranged so as to selectively at least partially close the first fluid duct (10) in the region of the branch.

8. Method for opening a flow-transfer passage of a branch from a first fluid duct, in particular exhaust-gas duct, in particular of an internal combustion engine, into a second fluid duct, in particular exhaust-gas duct, in particular of an internal combustion engine, wherein the flow-transfer passage is selectively opened or closed by a valve device, wherein the valve device is designed according to at least one of the preceding claims, **characterized in that**, for the opening of the flow-transfer passage, at least one second flap is firstly opened before a first flap is opened.

9. Method for closing a flow-transfer passage of a branch from a first fluid duct, in particular exhaust-gas duct, in particular of an internal combustion engine, into a second fluid duct, in particular exhaust-gas duct, in particular of an internal combustion engine, wherein the flow-transfer passage is selectively opened or closed by a valve device, wherein the valve device is designed according to at least one of Claims 1 to 7, **characterized in that**, for the closing of the flow-transfer passage, at least one second flap is firstly closed before a first flap is closed.

## Revendications

1. Dispositif de soupape, en particulier dispositif conducteur de gaz d'échappement, pour l'ouverture ou la fermeture sélectives d'une surface de trop-plein d'un branchement à partir d'un premier conduit de fluide, en particulier un premier conduit de gaz d'échappement (10), en particulier d'un moteur à combustion interne, dans lequel règne une pression de fluide, en particulier une pression de gaz d'échappement, jusque dans un deuxième conduit de fluide, en particulier un deuxième conduit de gaz d'échappement (12), en particulier d'un moteur à combustion interne, le dispositif de soupape comprenant au moins deux éléments de soupape (16, 20), **caractérisé en ce que** les au moins deux éléments de soupape (16, 20) sont disposés et réalisés de telle sorte qu'au moins un premier élément de soupape (16) ouvre une première proportion prédéterminée de la surface de trop-plein du branchement à l'encontre de la pression fluidique dans le premier conduit de fluide (10) et au moins un deuxième élément de soupape (20) ferme une deuxième proportion prédéterminée de la surface de trop-plein du branchement à l'encontre de la pression fluidique dans le premier conduit de fluide (10).

2. Dispositif de soupape selon la revendication 1, **caractérisé en ce qu'**au moins un premier élément de soupape (16) est réalisé sous forme de premier clapet, en particulier de premier clapet de gaz d'échappement, et au moins un deuxième élément de soupape (20) est réalisé sous forme de deuxième clapet, en particulier de deuxième clapet de gaz d'échappement.

3. Dispositif de soupape selon au moins l'une quelconque des revendications précédentes, **caractérisé en ce que** la première proportion prédéterminée de la surface de trop-plein est supérieure à la deuxième proportion prédéterminée de la surface de trop-plein.

4. Dispositif de soupape selon au moins l'une quelconque des revendications précédentes, **caractérisé en ce qu'**au moins un premier élément de soupape (16) est réalisé sous forme de tôle conductrice.

5. Dispositif de soupape selon au moins l'une quelconque des revendications précédentes, **caractérisé en ce qu'**au moins un actionneur est prévu, lequel actionne à la fois au moins un premier élément de soupape (16) ainsi qu'au moins un deuxième élément de soupape (20).

6. Dispositif de soupape selon la revendication 5, **caractérisé en ce que** l'au moins un premier élément de soupape (16) et l'au moins un deuxième élément de soupape (20) sont connectés par le biais d'un branchement en série à l'actionneur commun.

7. Dispositif de soupape selon au moins l'une quelconque des revendications précédentes, **caractérisé en ce qu'**au moins un premier élément de soupape (16) est réalisé et est disposé de telle sorte que celui-ci ferme au moins partiellement de manière sélective le premier conduit de fluide (10) dans la région du branchement.

8. Procédé pour l'ouverture d'une surface de trop-plein d'un branchement à partir d'un premier conduit de fluide, en particulier un conduit de gaz d'échappement, en particulier d'un moteur à combustion interne, jusque dans un deuxième conduit de fluide, en particulier un conduit de gaz d'échappement, en particulier d'un moteur à combustion interne, dans lequel la surface de trop-plein est fermée ou ouverte de manière sélective par un dispositif de soupape, le dispositif de soupape étant réalisé selon au moins l'une quelconque des revendications précédentes, **caractérisé en ce que** pour l'ouverture de la surface de trop-plein, au moins un deuxième clapet est tout d'abord ouvert, avant qu'un premier clapet ne soit ouvert.

9. Procédé pour la fermeture d'une surface de trop-plein d'un branchement à partir d'un premier conduit de fluide, en particulier un conduit de gaz d'échappement, en particulier d'un moteur à combustion interne, jusque dans un deuxième conduit de fluide, en particulier un conduit de gaz d'échappement, en particulier d'un moteur à combustion interne, dans lequel la surface de trop-plein est fermée ou ouverte de manière sélective par un dispositif de soupape, le dispositif de soupape étant réalisé selon au moins l'une quelconque des revendications 1 à 7, **caractérisé en ce que** pour la fermeture de la surface de trop-plein, au moins un deuxième clapet est tout d'abord fermé, avant qu'un premier clapet ne soit fermé.
